# EUROPÄISCHE PATENTSCHRIFT

(11) **EP 1 200 769 B1**
(45) Veröffentlichungstag und Bekanntmachung des Hinweises auf die Patenterteilung: **12.05.2004**
(21) Anmeldenummer: 00953073.4
(22) Anmeldetag: 19.07.2000
(51) Int. Cl.: F17C 5/06, C10L 3/00

(54) **VERFAHREN UND TANKSTELLE ZUM BETANKEN EINES FAHRZEUGSTANKS MIT EINEM GASFÖRMIGEN TREIBSTOFF**
METHOD AND FILLING STATION FOR FILLING A MOTOR VEHICLE WITH GASEOUS FUEL
PROCEDE ET POSTE D'APPROVISIONNEMENT POUR LE REMPLISSAGE DU RESERVOIR D'UN VEHICULE AVEC UN CARBURANT GAZEUX

(30) Priorität: 20.07.1999 DE 19933791
(43) Veröffentlichungstag der Anmeldung: 02.05.2002
(73) Patentinhaber: Linde Aktiengesellschaft, 65189 Wiesbaden (DE)
(72) Erfinder: ADLER, Robert, A-2201 Gerasdorf (AT)
(86) Internationale Anmeldenummer: PCT/EP2000/006900
(87) Internationale Veröffentlichungsnummer: WO 2001/006172

(56) Entgegenhaltungen:
- DE-C- 690 417
- DE-C- 19 650 999
- US-A- 3 879 176
- US-A- 4 805 674
- US-A- 5 160 506
- US-A- 5 782 936

## Beschreibung

Die Erfindung betrifft ein Verfahren und eine Tankstelle zum Betanken eines Fahrzeugs mit einem gasförmigen Treibstoff, wobei der Treibstoff verdichtet, zwischengespeichert und in den Fahrzeugtank entspannt wird und wobei der Treibstoff einen hohen Wasserstoffanteil enthält.

Die Erfindung betrifft außerdem eine Tankstelle für das erfindungsgemäße Verfahren mit einer Verdichterstation und einem Hochdruck (HD)-Speicher für den gasförmigen Treibstoff.

Bei der Verwendung von Erdgas als Treibstoff für Verbrennungsmotoren kommt es beim Kaltstart zu großen Verschleißerscheinungen, da aufgrund des hohen Wasserstoffanteils im Treibstoff ein Teil des bei der Verbrennung entstehenden Wasserdampfes an der kalten Zylinderwand des Motors kondensiert. Durch die hohen Kolbengeschwindigkeiten in Verbrennungsmotoren von etwa 7 m/s werden die an der Zylinderwand kondensierten Wassertropfen durch den Kolben praktisch ohne Anpassungszeit auf die Kolbengeschwindigkeit beschleunigt. Dies führt zu Kavitationserscheinungen, welche die Zylinderwand zerstören. Dadurch kann das Kondenswasser noch besser angreifen und die Zylinderwand verrostet. Dieser Effekt führt bei Motoren, die sehr oft kalt gestartet werden, zu einer Standzeitverkürzung von ca. 30 %. Zu diesen Beschädigungen kommt es praktisch bei allen Energieträgem mit hohem Wasserstoffanteil.

Es ist bereist bekannt - bspw. aus der US-A-5 782 936 -, gasförmigem Treibstoff ölhaltige Additive, die der Verringerung der Partikel- und CO-Emissionen dienen, zuzumischen.

Aufgabe der Erfindung ist es, die oben genannten Nachteile zu vermeiden.

Diese Aufgabe wird erfindungsgemäß gelöst von einem Verfahren mit den Merkmalen des Anspruchs 1 und von einer Tankstelle mit den Merkmalen des Anspruchs 6. Ausführungen der Erfindung sind Gegenstand von Unteransprüchen.

Kennzeichnend an dem erfindungsgemäßen Verfahren ist, daß dem Treibstoff dosiert ein Öl oder ein Ölgemisch (Additiv) zugesetzt wird. Bei einem Kaltstart eines Verbrennungsmotors kondensiert der Ölnebel an der kalten Zylinderwand beim Saugtakt (Unterdruck) und überzieht diese mit einer schützenden Gleitschicht, von welcher die nachher kondensierenden Wassertropfen abgleiten. Dadurch wird das Auftreten von Kavitation verhindert. Außerdem zerstört das Additiv die Oberflächenspannung des Wassers, wodurch die Tropfenbildung weitgehend verhindert wird.

Bei einer Ausgestaltung des erfindungsgemäßen Verfahrens kann das Öl oder Ölgemisch Mineralöl und/oder synthesisches Öl enthalten.

Der Treibstoff kann den Wasserstoff als Wasserstoffmolekül und/oder als Kohlenwasserstoff enthalten.

Das Öl oder Ölgemisch kann so zugesetzt werden, daß beim höchsten beim Betanken auftretenden Druck des Treibstoffes der Sättigungsdruck des Öles oder einer Komponente des Öles unterschritten wird. Dies bietet den Vorteil, daß bei der auf das Verdichten folgenden Speicherung des Treibstoffes unter Druck keine Kondensation von Öl oder von Komponenten des Öles auftreten können. Erst bei der Entspannung in den Fahrzeugtank treten die erwünschten Ölnebel auf.

Kennzeichnend an der erfindungsgemäßen Tankstelle ist, daß die Tankstelle eine Dosiereinrichtung für Öl oder ein Ölgemisch (Additiv) enthält. Die Dosiereinrichtung ermöglicht eine kontinuierliche und vom Treibstoffdurchsatz gesteuerte Dosierung. Eine einfachere Ausgestaltung mit konstanter Dosierung, ausgelegt für einen mittleren Treibstoffdurchsatz der Verdichterfraktion, kann jedoch ebenfalls vorgesehen werden. Durch die Additivzugabe wird die Motorstandzeit wesentlich verlängert.

Die Dosiereinrichtung kann der Treibstoff-Verdichterstation vorgeschaltet oder zwischen zwei Verdichterstufen angeordnet sein. Gegen eine Einspeisung des Additivs nach der Verdichterstation spricht der dann notwendige hohe Einspeisedruck.

Die Erfindung wird anhand einer Ausführungsform mit einer Figur näher erläutert.

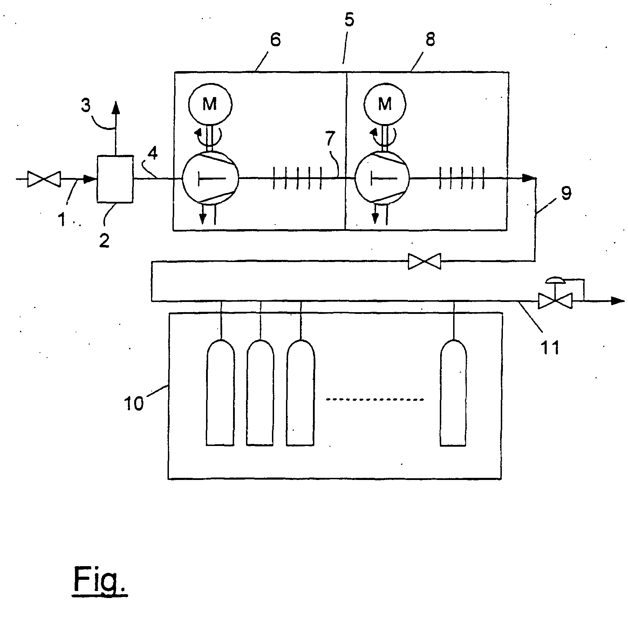

Erdgas wird einer Pipeline bei einem Pipelinedruck, der beispielsweise zwischen 1 und 10 bar liegt, entnommen und, soweit für den Betrieb in Verbrennungsmotoren notwendig, aufbereitet: Beispielsweise werden Partikel entfernt und das Erdgas bis auf weniger als 10 mol-ppm Wassergehalt getrocknet. (Diese Aufbereitung ist in der Figur nicht dargestellt.)

Dem so aufbereiteten Erdgasstrom 1 wird mit Hilfe einer Dosiereinrichtung 2 Öl 3 derart zugemischt, daß der Strom 4 etwa 40 bis 60 mol-ppm Öl enthält. Der Strom 4 wird einer Verdichterstation 5 zugeführt und in einer ersten Verdichtungsstufe 6 auf einen Zwischendruck verdichtet, abgekühlt, als Strom 7 in einer zweiten Verdichtungsstufe 8 auf einen Enddruck verdichtet und wieder abgekühlt. Mit dem so gewonnen Hochdruckstrom 9 wird ein Hochdruckspeicher 10 bis zum maximalen Speicherdurck befüllt. Die Betankung von Fahrzeugen erfolgt aus dem Speicher 10, indem ein Hochdruckstrom 11 in den jeweiligen Fahrzeugtank entspannt wird, bis dessen maximaler Fülldruck von beispielsweise 200 bar, erreicht wird.

## Patentansprüche

1. Verfahren zum Betanken eines Fahrzeugtanks mit einem gasförmigen Treibstoff, wobei der Treibstoff verdichtet, zwischengespeichert und in den Fahrzeugtank entspannt wird und wobei der Treibstoff einen hohen Wasserstoffanteil enthält, **dadurch gekennzeichnet, daß** dem Treibstoff (1) dosiert ein Öl oder ein Ölgemisch (3) zugesetzt wird (2).

2. Verfahren nach Anspruch 1, **dadurch gekennzeichnet, daß** das Öl oder Ölgemisch (3) Mineralöl enthält.

3. Verfahren nach Anspruch 1, **dadurch gekennzeichnet, daß** das Öl oder Ölgemisch (3) synthetisches Öl enthält.

4. Verfahren nach einem der Ansprüche 1 bis 3, **dadurch gekennzeichnet, daß** der Treibstoff (1) den Wasserstoff als Wasserstoffmolekül und/oder als Kohlenwasserstoff enthält.

5. Verfahren nach einem der Ansprüche 1 bis 4, **dadurch gekennzeichnet, daß** das Öl oder Ölgemisch (3) so zugesetzt wird (2), daß beim höchsten beim Betanken auftretenden Druck des Treibstoffes der Sättigungsdruck des Öles oder einer Komponente des Öles unterschritten wird.

6. Tankstelle zur Durchführung des Verfahrens nach einem der Ansprüche 1 bis 5 mit einer Verdichterstation und einem Hochdruck (HD)-Speicher für den gasförmigen Treibstoff, **dadurch gekennzeichnet, daß** die Tankstelle eine Dosiereinrichtung (2) für Öl oder ein Ölgemisch (3) enthält.

7. Tankstelle nach Anspruch 6, **dadurch gekennzeichnet, daß** die Dosiereinrichtung (2) der Verdichterstation (5) vorgeschaltet oder zwischen zwei Verdichtungsstufen (6, 8) angeordnet ist.

## Claims

1. Method for filling a vehicle tank with a gaseous fuel, the fuel being compressed, intermediately stored and expanded into the vehicle tank, and the fuel containing a high hydrogen fraction, **characterized in that** an oil or an oil mixture (3) is added (2) to the fuel (1) in a metered manner.

2. Method according to Claim 1, **characterized in that** the oil or oil mixture (3) contains mineral oil.

3. Method according to Claim 1, **characterized in that** the oil or oil mixture (3) contains synthetic oil.

4. Method according to one of Claims 1 to 3, **characterized in that** the fuel (1) contains the hydrogen as hydrogen molecule and/or as hydrocarbon.

5. Method according to one of Claims 1 to 4, **characterized in that** the oil or oil mixture (3) is added (2) in such a way that, at the highest fuel pressure occurring during filling, the saturation pressure of the oil or of a component of the oil is undershot.

6. Filling station for carrying out the method according to one of Claims 1 to 5, with a compressor station and with a high-pressure (HP) store for the gaseous fuel, **characterized in that** the filling station contains a metering device (2) for oil or an oil mixture (3).

7. Filling station according to Claim 6, **characterized in that** the metering device (2) precedes the compressor station (5) or is arranged between two compression stages (6, 8).

## Revendications

1. Procédé de remplissage d'un réservoir de véhicule avec un carburant gazeux, dans lequel le carburant est comprimé, stocké de manière intermédiaire et détendu dans le réservoir du véhicule, et dans lequel le carburant contient une grande proportion d'hydrogène, **caractérisé en ce que** l'on ajoute (2) au carburant (1) une huile ou un mélange d'huile (3).

2. Procédé selon la revendication 1, **caractérisé en ce que** l'huile ou le mélange d'huile (3) contient de l'huile minérale.

3. Procédé selon la revendication 1, **caractérisé en ce que** l'huile ou le mélange d'huile (3) contient de l'huile synthétique.

4. Procédé selon l'une quelconque des revendications 1 à 3, **caractérisé en ce que** le carburant (1) contient l'hydrogène sous forme de molécule d'hydrogène et/ou sous forme d'hydrocarbure.

5. Procédé selon l'une quelconque des revendications 1 à 4, **caractérisé en ce que** l'huile ou le mélange d'huile (3) est ajouté (2) de telle sorte que pour la pression de carburant maximale s'établissant lors du remplissage, la pression de saturation de l'huile ou d'un composant de l'huile n'est pas atteinte.

6. Poste de remplissage pour mettre en oeuvre le procédé selon l'une quelconque des revendications 1 à 5, avec un poste de compression et un réservoir haute pression (HP) pour le carburant gazeux, **caractérisé en ce que** le poste de remplissage contient un dispositif de dosage (2) pour l'huile ou un mélange d'huile (3).

7. Poste de remplissage selon la revendication 6, **caractérisé en ce que** le dispositif de dosage (2) est monté avant le poste de compression (5) ou est disposé entre deux étages de compression (6, 8).
